## Europäisches Patentamt
## European Patent Office
## Office européen des brevets

(11) Veröffentlichungsnummer: **0 149 485 B1**

(12) **EUROPÄISCHE PATENTSCHRIFT**

(45) Veröffentlichungstag der Patentschrift: **13.06.90**

(21) Anmeldenummer: **85100304.6**

(22) Anmeldetag: **14.01.85**

(51) Int. Cl.⁵: **B 65 G 53/32, B 65 G 53/46**

(54) Verfahren und Vorrichtung zum Fördern von pulverförmigem oder körnigem Material.

(30) Priorität: **17.01.84 CH 194/84**

(43) Veröffentlichungstag der Anmeldung:
**24.07.85 Patentblatt 85/30**

(45) Bekanntmachung des Hinweises auf die
Patenterteilung:
**13.06.90 Patentblatt 90/24**

(84) Benannte Vertragsstaaten:
**AT CH DE FR GB LI SE**

(56) Entgegenhaltungen:
**DE-A-3 031 219**

(73) Patentinhaber: **SANDOZ AG**
**Lichtstrasse 35**
**CH-4002 Basel (CH)**
㊴ **CH FR GB LI SE**

(73) Patentinhaber: **SANDOZ-PATENT-GMBH**
**Humboldtstrasse 3**
**D-7850 Lörrach (DE)**
㊴ **DE**

(73) Patentinhaber: **SANDOZ-ERFINDUNGEN**
**Verwaltungsgesellschaft m.b.H.**
**Brunner Strasse 59**
**A-1235 Wien (AT)**
㊴ **AT**

(72) Erfinder: **Egger, Hans Rudolf**
**Chrummwisstrasse 32**
**CH-8700 Küsnacht (CH)**

Courier Press, Leamington Spa, England.

# Beschreibung

Die Erfindung bezieht sich auf ein Verfahren zum Fördern von pulverförmigem oder körnigem Material, insbesondere zum Spritzen von Beton, Mörtel oder feuerfestem Auskleidungsmaterial, nach dem Oberbegriff des Anspruchs 1 sowie ferner auf eine Vorrichtung zur Durchführung des Verfahrens nach dem Oberbegriff des Anspruchs 6. Derertige Verfahren und Vorrichtung sind bekannt (z.B. DE-A-3031219).

Eine solche Vorrichtung dient zum Dosieren und zum Einschleusen des Materials aus einem unter atmosphärischem Druck stehenden Behälter in eine unter einem Ueberdruck stehende Förderleitung. Der Rotor kann beispielsweise ein Bestandteil einer Betonspritzmaschine sein, während die Förderleitung in einem Schlauch mit einer Spritzdüse endet, durch welche Beton auf eine Unterlage, beispielsweise auf eine Tunnelwand gespritzt wird.

Aus dem deutschen Gebrauchsmuster DE-U 83 24 601 (Meynadier und Cie. AG), des em 09.08.84 der Offentlichkeit zugänglich gemacht wurde, ist eine Vorrichtung zum Spritzen von Beton, Mörtel oder feuerfesten Auskleidungsmaterialien bekannt, welche dem Oberbegriff des Anspruchs 6 entspricht. Dabei wird der Inhalt der Kammern nacheinander an der Entleerungsstelle mittels Druckluft in die Förderleitung ausgestossen. Die Druckluft dient dabei auch noch zum Durchspülen der Förderkammern, um diese möglichst weitgehend zu entleeren. Da das Ausstossen des Materials aus den Förderkammern im Rhythmus der die Entleerungsstelle passierenden Förderkammern erfolgt, entsteht in der Förderleitung eine Pulsation, welche dem gleichmässigen, durch die Injektordüse austretenden Druckluftstrahl überlagert wird. Es hat sich herausgestellt, dass der jeweilige Entleerungsstoss die Injektorwirkung und damit auch die Förderwirkung desselben stört und dessen Leistungsfähigkeit herabsetzt. Andererseits ist es aber erwünscht, die Förderkammern möglichst vollständig zu entleeren und dabei das Material von den Kammerwänden loszulösen. Es besteht sonst die Gefahr, dass sich das Material an den Kammerwänden verfestigt, wenn es nicht herausgelöst wird. Ferner ist durch die erwähnte Pulsation eine gleichmässige Führung der Spritzdüse und ein gleichmässiger Materialauftrag mittels der Spritzdüse erschwert.

Der Erfindung liegt daher die Aufgabe zugrunde, ein Verfahren der eingangs genannten Art anzugeben, bei welchem die Förderung des Materials durch den Injektor unter Vermeidung von Störungen der Strömung beim Entleeren der Förderkammern in die Förderleitung verbessert wird. Ferner soll eine Vorrichtung zur Durchführung des Verfahrens geschaffen werden. Die gestellte Aufgabe wird erfindungsgemäss durch die in den kennzeichnenden Teilen der Ansprüche 1 und 6 angegebenen Merkmale gelöst.

Bei der erfindungsgemässen Lösung entstehen beim Entleeren der Förderkammern keine, die Injektorwirkung störenden Druckstösse, da die Entleerung im wesentlichen unter der Einwirkung der Schwerkraft erfolgt. Dies ist jedoch nur möglich, da durch die erfindungsgemässe Lösung das Anhaften von Material an den Wänden der Förderkammern verhindert wird. Die durch die Wände in die Förderkammern eingelassene Luftströmung begünstigt zwar die Entleerung der Förderkammern, ist jedoch gering im Vergleich zu einem die Förderkammern in Längsrichtung durchspülenden Druckluftstoss. Deshalb tritt in der Förderleitung beim Entleeren der Förderkammern kein Druckanstieg auf, so dass eine gleichmässige Förderleistung gewährleistet ist.

Bei einer besonders bevorzugten Ausführungsform nach Anspruch 2 erhöht sich die Fliessfähigkeit des Materials in den Kammern, so dass auch die Entleerungsgeschwindigkeit erhöht werden kann.

Bei einer Ausführungsform nach Anspruch 3 werden im wesentlichen sich in vertikaler Richtung erstreckende Kammern vorausgesetzt, deren Bodenfläche durch eine feststehende Dichtungsscheibe begrenzt ist, welche im Bereich der Entleerungsstelle eine Oeffnung aufweist.

Bei einer bevorzugten Ausführungsform nach Anspruch 4 wird bereits beim Einfüllen des Materials in die Förderkammern ein Ansetzen an die Wände der Förderkammern verhindert.

Bei einer bevorzugten Ausführungsform nach Anspruch 5 dient der durch die Injektordüse eingeführte Druckluftstrahl als alleiniges Fördermittel bis zum Austritt des Materials aus einer Spritzdüse.

Die erfindungsgemässe Vorrichtung nach Anspruch 6 dient zur Durchführung des Verfahrens nach einem der vorstehenden Ansprüche.

Bei einer bevorzugten Ausführungsform nach Anspruch 7 sind die Förderkammern durch auswechselbare Einsätze gebildet und von je einer Luftkammer umgeben, so dass eine Zufuhr der Luftströmung durch die gesamte, die Förderkammer umgebende Wandfläche möglich ist.

Bei einer bevorzugten Ausführungsform nach Anspruch 8 wird das eventuelle Anhaften von Material an den Kammerwänden nahezu verunmöglicht.

Die Ansprüche 8 und 10 geben bevorzugte konstruktive Ausführungen für die Zufuhr der Luftströmung zu den Kammern an.

Anhand der Zeichnung wird ein Ausführungsbeispiel der Erfindung näher erläutert. Es zeigt:

Fig. 1 einen Vertikalschnitt durch eine Vorrichtung zum Fördern von pulverförmigem oder körnigem Material und

Fig. 2 den Rotor der Vorrichtung in einer Draufsicht mit Einzelheiten der Luftzuführung.

Die zur Durchführung des erfindungsgemässen Verfahrens vorgesehene und in der Zeichnung als Ausführungsbeispiel dargestellte Vorrichtung dient zum Fördern von pulverförmigem oder körnigem Material und insbesondere zum Spritzen von Beton, Mörtel oder feuerfestem Auskleidungsmaterial.

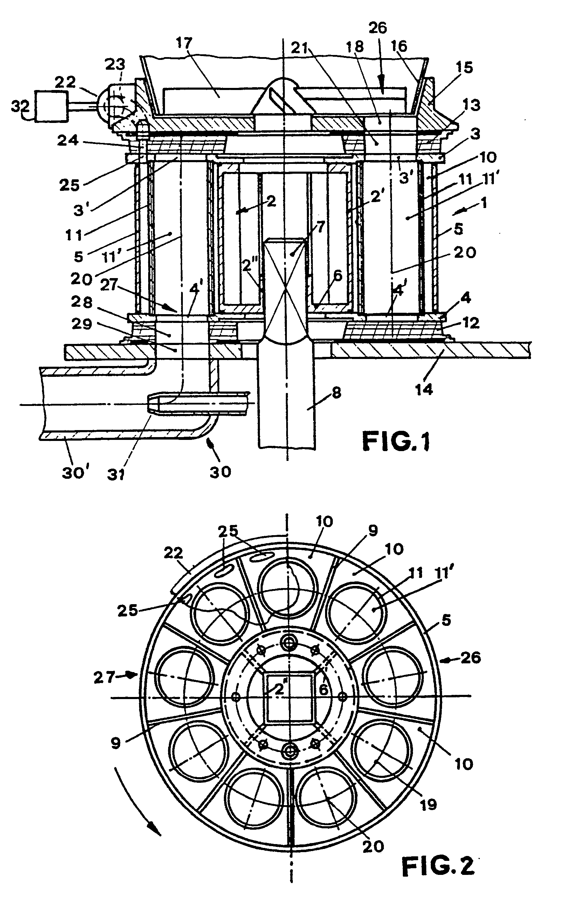

Die Vorrichtung gemäss Fig. 1 weist einen Rotor 1 auf, welcher aus einem nabenartigen zentralen Träger 2 und aus oberen und unteren Deckplatten 3 und 4 zusammengesetzt ist, wobei eine zylindrische vertikale Aussenwand 5 sich am Umfang zwischen der oberen und der unteren Deckplatte 3 bzw. 4 erstreckt. Der Rotor 1 ist an einem Mitnehmer 7 einer vertikalen Welle 8 mitdrehend angeordnet, welche durch einen nicht dargestellten Motor angetrieben ist.

Der nabenartige zentrale Träger 2 besteht aus einer zylindrischen Innenwand 2' sowie aus einer inneren Hülse 2'', welche zweckmässigerweise im Querschnitt viereckig ausgebildet ist und die Lagerung des Rotors 1 am Mitnehmer 7 bildet. Die innere Hülse 2'' ist durch vier radiale Streben 6 mit der zylindrischen Innenwand 2' verbunden, welche mit der Aussenwand 5 einen ringförmigen Raum begrenzt.

Gemäss Fig. 2 ist der ringförmige Raum durch radiale Zwischenwände 9 in neun gleich grosse sektorenförmige Luftkammern 10 unterteilt. In jeder Luftkammer 10 befindet sich ein zylindrischer Einsatz 11. Die Einsätze 11 weisen luftdurchlässige Wände auf und können beispielsweise als Büchsen aus porösem Material hergestellt sein. Die Innenwand dieser Büchsen wird so bearbeitet, dass sie eine glatte Oberfläche aufweist. Sowohl die obere Deckplatte 3 als auch die untere Deckplatte 4 ist mit am Umfang verteilt angeordneten, mit den zylindrischen Einsätzen 11 korrespondierenden, gleich grossen Oeffnungen 3' bzw. 4' versehen.

Der Rotor 1 ist zwischen einer oberen Dichtungsscheibe 13 und einer ebensolchen unteren Dichtungsscheibe 12 angeordnet, welche letztere auf einer Grundplatte 14 ruht. Oberhalb der Dichtungsscheibe 13 ist ein runder Aufsatz 15 vorhanden, welcher gleichachsig zur Welle 8 angeordnet ist und einen Einfülltrichter 16 trägt. Im Trichter 16 befindet sich ein Schaufelrad 17, welches unmittelbar mit der Welle 8 oder mit dem Rotor 1 in nicht näher dargestellter Weise in Antriebsverbindung steht.

Am Boden des Aufsatzes 15 ist ferner eine kreisförmige Oeffnung 18 vorhanden, welche im Durchmesser etwa dem Innendurchmesser eines zylindrischen Einsatzes 11 entspricht und deren Mittelpunkt auf einer Kreislinie 19 liegt, entlang welcher die vertikalen Mittelachsen 20 der Einsätze 11 liegen. Die obere Dichtungsscheibe 13 weist eine der Oeffnung 3' entsprechende Oeffnung 21 auf, welche mit dieser einen vertikalen Kanal bildet, der bei der Drehung des Rotors 1, mit den Oeffnungen 3' nacheinander kommunizierend, die zylindrischen Einsätze 11 fortlaufend mit dem Innern des Trichters 16 verbindet. Diese Stelle ist die in der Fig. 2 dargestellte Einfüllstelle 26, an welcher das Füllen der Einsätze 11 mit pulverförmigem oder körnigem Material erfolgt, welches durch die Einsätze 11 bis zu einer Entleerungsstelle 27 gefördert wird. Die Einsätze 11 bilden die Wände der Förderkammern 11'.

Der Aufsatz 15 ist mit einem am Umfang desselben angeordneten, mit einer Druckluftquelle 32 verbundenen Druckluftanschluss 22 versehen, welcher durch eine Leitung 23 mit einem Luftkanal 24 in Verbindung steht. Der Luftkanal 24 befindet sich in der oberen Dichtungsscheibe 13 und erstreckt sich bogenförmig zwischen der Einfüllstelle 26 und der Entleerungsstelle 27 im Bereich des äusseren Randes der Dichtungsscheibe 13. In der oberen Deckplatte 3 sind weitere Oeffnungen 25 angeordnet, welche eine Fortsetzung des Kanals 24 bilden und ausserhalb der Einsätze 11 in die Luftkammern 10 münden. Es können auch mehrere Kanäle 24 vorgesehen sein, welche mit dem gleichen Druckluftanschluss 22, vorzugsweise über mehrere Leitungen 23, in Verbindung stehen. In dieser Weise wird erreicht, dass jede sektorförmige Luftkammer 10 des Rotors 1 bei der Drehung desselben zwischen der Einfüllstelle 26 und der Entleerungsstelle 27 mit Druckluft beaufschlagt wird.

Gemäss Fig. 1 befindet sich der auf der rechten Seite dieser Fig. gezeigte Einsatz 11 mit der Oeffnung 3' unmittelbar unterhalb der Oeffnungen 18 und 21 an der Einfüllstelle 26, wo dieser Einsatz 11 aus dem Trichter 16 mit Material gefüllt wird. Gleichzeitig befindet sich der auf der linken Seite der Fig. 1 dargestellte Einsatz 11 an der Entleerungsstelle 27, an welcher die untere Dichtungsscheibe 12 eine Oeffnung 28 aufweist, deren Durchmesser etwa dem des Einsatzes 11 entspricht. Die Oeffnung 28 mündet über eine entsprechende Oeffnung 29 in der Grundplatte 14 in einen den Anfang einer Förderleitung 30 bildenden Austrittskrümmer, welcher an die Oeffnung 29 angeschlossen ist. Der Austrittskrümmer, welcher zunächst gleichachsig und anschliessend um 90° abgebogen zur Achse des Einsatzes 11 verläuft, ist ferner mit einer Injektordüse 31 versehen, welche mit der Druckluftquelle 32 zu verbinden ist. Die Injektordüse 31 ist gleichachsig im abgebogenen Teil 30' angeordnet.

Die Drehrichtung des Rotors 1 ist in der Fig. 2 mit einem Pfeil dargestellt. Von der Einfüllstelle 26 gelangen also die Luftkammern 10 mit den Einsätzen 11 im Gegenuhrzeigersinn zur Entleerungsstelle 27. Der stationäre Luftkanal 24 in der oberen Dichtungsscheibe 13 verläuft dabei zwischen der Entleerungsstelle 27 und der Einfüllstelle 26. Dabei kommt jede Luftkammer 10 nach der Einfüllstelle 26 mit dem Luftkanal 24 in Verbindung, indem die Oeffnungen 25 in der gemeinsamen Deckplatte 3 die untere Seite der oberen Dichtungsscheibe 13 bestreichen, in welche die Luftkanäle 24 eingelassen sind. Die weiteren Luftkammern 10 folgen anschliessend nach je 40° Drehung, wobei nach Durchlaufen der Entleerungsstelle 27 die Druckluftzufuhr aufhört, da sich die Luftkanäle 24 nicht über die Entleerungsstelle 27 hinauserstrecken. Zwischen der Entleerungsstelle 27 und der Einfüllstelle 26 (in Drehrichtung des Rotors I) befinden sich also keine Druckluftkanäle 24.

Im Betrieb der beschriebenen Vorrichtung wird an der Einfüllstelle 26 die sich jeweils unter dieser Stelle befindende Förderkammer 11' unter Mithilfe des rotierenden Schaufelrades 17 mit pulverförmigem oder körnigem Material gefüllt. Bei Drehung des Rotors 1 in Pfeilrichtung gelangt die zuvor gefüllte Förderkammer 11' in Bereiche der Druckluftkanäle 24, aus welcher Druckluft strömt. Durch die Oeffnung 25 der Luftkammer 10, welche jeweils unterhalb des ersten Luftkanals 24 vorbeistreicht, gelangt Druckluft in die Luftkammer 10. Durch die innerhalb der Luftkammer 10 angeordneten Kammerwände 11 aus luftdurchlässigem Material wird die Förderkammer 11' mit Luftströmungen beaufschlagt, welche durch die Poren des luftdurchlässigen Materials in die Förderkammer 11' eindringen und dabei auf das pulverförmige oder körnige Material auftreffen. Es entsteht dabei eine Strömung, durch welche das pulverförmige oder körnige Material während des Transportes von der Einfüllstelle 26 an die Entleerungsstelle 27 durch Luftströme beaufschlagt und aufgelockert wird, wobei unter Einwirkung dieser Luftströme das Material bei Erreichen der Entleerungsstelle 27 zum Fliessen gebracht wird. Es bildet sich dabei ein Schwerkraftstrom aus, durch welchen auch wandnahes Material erfasst wird, so dass ein Anhaften des Materials an den glatt bearbeiteten Wänden ausgeschlossen ist.

An der Entleerungsstelle 27 entsteht zwischen der Förderkammer 11' und der Förderleitung 30 ein Druckgefälle, da durch die Injektordüse 31 eine Saugströmung hervorgerufen wird. Die durch die luftdurchlässigen Kammerwände 11 in die Förderkammer 11' eindringenden Luftströme sind gering im Vergleich zu dem durch die Injektordüse 31 erzeugten Druckluftstrahl. Dadurch ist gewährleistet, dass die Injektorwirkung beim Entleeren der Förderkammern 11' nicht durch einen Druckluftstoss gestört wird. Trotzdem ist eine vollständige Entleerung der Förderkammern 11' gewährleistet, da durch die erfindungsgemässe Lösung wirksam verhindert wird, dass Material an den Kammerwänden anhaftet. Ein besonderes Merkmal der Erfindung liegt in der Tatsache, dass zur Erzielung der beschriebenen Wirkung nur sehr geringe Luftströme erforderlich sind, während bei bekannten Lösungen immer stärkere Druckluftstösse eingesetzt wurden, um eine vollständige Entleerung der Förderkammern zu erzielen.

Insgesamt wird durch die Freihaltung der Kammerwände von Material, durch die Ausnutzung der Schwerkraft und durch die Saugwirkung der Injektordüse eine rasche und vollständige Entleerung der Förderkammern erzielt. Anschliessend hört bei der Weiterdrehung des Rotors 1 in Pfeilrichtung die Strömung aus der Luftkammer 10 in die Förderkammer 11' auf. Dabei wird ein eventuell noch vorhandener Ueberdruck in der Förderkammer an einer Auspuffstelle abgeblasen. Da keine Restmengen von Material in den Förderkammern 11' vorhanden sind, wird die Umgebung beim Ablassen des Ueberdruckes nicht verunreinigt.

Dementsprechend kann die oft übliche, zwischen der Entleerungsstelle 27 und der Einfüllstelle 26 durchzuführende Spülung der Kammer entfallen. Da bei der Druckentlastung der Förderkammer 11 die Umgebung nicht verunreinigt wird, eignet sich die beschriebene Vorrichtung zum Arbeiten in Tunnel, in Stollen und in geschlossenen Räumen.

Das Fördern von pulverförmigem oder körnigem Material nach dem vorgeschlagenen Verfahren ist mittels der erfindungsgemässen Vorrichtung ohne zusätzlichen Energieaufwand durchführbar, da das Material ohne zusätzlichen, von aussen erzeugten Entleerungsdruck aus den Förderkammern entleert werden kann.

Obwohl im dargestellten Ausführungsbeispiel eine Rotormaschine beschrieben wurde, lässt sich die Erfindung auch bei der in Fachkreisen bekannten Zweikammermaschine anwenden.

## Patentansprüche

1. Verfahren zum Fördern von pulverförmigem oder körnigem Material, insbesondere zum Spritzen von Beton, Mörtel oder feuerfestem Auskleidungsmaterial, mittels eines Förderkammern (11') aufweisenden Rotors (1), wobei das Material an einer Einfüllstelle (26) in die Förderkammern (11') eingefüllt und an einer Entleerungsstelle (27) unter Mitwirkung der Schwerkraft in eine Förderleitung (30) überführt wird, in welcher für den Weitertransport des Materials mittels eines Druckluftstrahles eine Injektorströmung erzeugt wird, dadurch gekennzeichnet, dass das Material während des Transportes von der Ein füllstelle (26) an die Entleerungsstelle (27) durch Luftströme beaufschlagt und aufgelockert wird und dass unter Einwirkung dieser Luftströme das Material bei Erreichen der Entleerungsstelle (27) zum Fliessen gebracht wird.

2. Verfahren nach Anspruch 1, dadurch gekennzeichnet, dass das Material in den Förderkammern (11') vor der Entleerung mindestens annähernd in einen Schwebezustand überführt wird.

3. Verfahren nach Anspruch 1 oder 2, dadurch gekennzeichnet, dass die Luftströme durch Poren der im wesentlichen vertikalen Wände (11) der Förderkammern (11') erzeugt werden.

4. Verfahren nach einem der Ansprüche 1 bis 3, dadurch gekennzeichnet, dass die Luftströmung mindestens solange aufrechterhalten wird, wie die Förderkammern (11') mit Material gefüllt sind.

5. Verfahren nach einem der Ansprüche 1 bis 4, dadurch gekennzeichnet, dass der mittels der Injektordüse (31) in die Förderleitung (30) eingeführte Druckluftstrahl zum Fördern und Spritzen des Materials bemessen wird.

6. Vorrichtung zur Durchführung des Verfahrens nach einem der Ansprüche 1 bis 5, mit einem aufrecht stehend angeordneten Rotor (1), dessen Förderkammern (11') sich in konzentrischer Anordnung um die Rotorachse parallel zur Rotorachse erstrecken, wobei der Rotor (1) zur Erzeugung einer Luftströmung mit einer Druckluftquelle (32) verbunden ist, mit einer oberhalb des Rotors (1) angeordneten Einfüllstelle (18, 21, 26), einer um einen Drehwinkel zur Einfüllstelle versetzten, unterhalb des Rotors (1) angeordneten Entleerungsstelle (27) und einer von der Entleerungsstelle ausgehenden Förderleitung (30), in welche eine mit der Druckluftquelle (32) verbundene Injektordüse (31) mündet, dadurch gekennzeichnet, dass die Wände (11) der Förderkammern (11') luftdurchlässig sind und dass Mittel (22, 23, 24, 25) vorgesehen sind, um die Förderkammern (11') bei laufendem Rotor (1) mindestens bei Annäherung an die Entleerungsstelle (27) mit der Druckluftquelle (32) in Verbindung zu setzen.

7. Vorrichtung nach Anspruch 6, dadurch gekennzeichnet, dass die Wände (11) der Förderkammern (11') durch Einsätze gebildet sind, von denen jeder innerhalb einer Luftkammer (10) angeordnet ist und die Luftkammern über die genannten Mittel (22, 23, 24, 25) mit der Druckluftquelle (32) verbindbar sind.

8. Vorrichtung nach Anspruch 7, dadurch gekennzeichnet, dass die Einsätze (11) aus porösem Werkstoff bestehen und inwendig glatt bearbeitet sind.

9. Vorrichtung nach Anspruch 8, dadurch gekennzeichnet, dass in der Bewegungsbahn der Einsätze (11) zwischen der Füllstelle (26) und der Entleerungsstelle (27) mit einem ortsfesten Druckluftanschluss (22) verbundene Luftkanäle (24) vorhanden sind, an welchen bei der Bewegung des Rotors Oeffnungen (25) vorbeistreichen, die in die gemeinsame Deckplatte (3) der Einsätze (11) und der Luftkammer (10) eingelassen sind und in die Luftkammern (10) münden.

10. Vorrichtung nach Anspruch 9, dadurch gekennzeichnet, dass der Druckluftanschluss (22) an einem Aufsatz (15) angeordnet ist und die Luftkanäle (24) in eine obere, zwischen dem Rotor (1) und dem Aufsatz (15) angeordnete Dichtungsscheibe (13) eingelassen sind.

**Revendications**

1. Procédé pour transporter des matières pulvérulentes ou granuleuses, en particulier pour la projection de béton, de mortier ou de matériaux de garniture intérieure réfractaire, au moyen d'un rotor (1) muni de chambres transporteuses (11'), le matériau étant introduit dans les chambres transporteuses (11') à un point de remplissage (26) et transféré, à un point d'évacuation (27), avec le concours de la gravité, à une conduite d'extraction (30) à l'intérieur de laquelle un courant d'injection est produit au moyen d'un jet d'air comprimé pour le transport ultérieur du matériau, caractérisé en ce que, pendant le transport entre le point de remplissage (26) et le point d'évacuation (27), le matériau est soumis à des courants d'air et désagrégé, et que le matériau, sous l'action de ces courants d'air, est fluidifié dès qu'il atteint le point d'évacuation (27).

2. Procédé selon la revendication 1, caractérisé en ce que, avant l'évacuation, le matériau dans les chambres transporteuses (11') est amené, du moins approximativement, à un état de suspension.

3. Procédé selon l'une des revendications 1 ou 2, caractérisé en ce que les courants d'air sont produits par des pores des parois (11) sensiblement verticales des chambres transporteuses (11').

4. Procédé selon l'une des revendications 1 à 3, caractérisé en ce que le courant d'air est maintenu au moins aussi longtemps que les chambres transporteuses (11') sont remplies de matériaux.

5. Procédé selon l'une des revendications 1 à 4, caractérisé en ce que le jet d'air comprimé introduit dans la conduite de refoulement (30) au moyen de la buse d'injecteur (31) est dimensionné pour le transport et la projection du matériau.

6. Dispositif pour la mise en oeuvre du procédé selon l'une des revendications 1 à 5, avec un rotor (1) monté verticalement dont les chambres transporteuses (11') s'étendent, en disposition concentrique autour de l'axe du rotor, parallèlement à l'axe du rotor, le rotor (1) étant raccordé pour la production d'un courant d'air à une source d'air comprimé (32), avec un point de remplissage (18, 21, 26) situé au-dessus du rotor (1), un point d'évacuation (27) décalé d'un angle de rotation par rapport au point de remplissage et disposé en dessous du rotor (1), et une conduite de refoulement (30) partant du point d'évacuation et dans laquelle débouche une buse d'injecteur (31) raccordée à la source d'air comprimé (32), caractérisé en ce que les parois (11) des chambres transporteuses (11') sont perméables à l'air et qu'il est prévu des moyens (22, 23, 24, 25) permettant, lorsque le rotor (1) tourne, de mettre les chambres transporteuses (11') en communication avec la source d'air comprimé (32), au moins lorsqu'elles approchent du point d'évacuation (27).

7. Dispositif selon la revendication 6, caractérisé en ce que les parois (11) des chambres transporteuses (11') sont constituées par des inserts dont chacun est disposé à l'intérieur d'une chambre d'air (10) et que les chambres d'air peuvent être raccordées à la source d'air comprimé (32) par l'intermédiaire desdits moyens (22, 23, 24, 25).

8. Dispositif selon la revendication 7, caractérisé en ce que les inserts (11) sont réalisés en un matériau poreux et que leur face intérieure est lisse.

9. Dispositif selon la revendication 8, caractérisé en ce que dans le trajet de mouvement des inserts (11) entre le point de remplissage (26) et le point d'évacuation (27) sont disposés des canaux d'air (24) communiquant avec une prise d'air comprimé (22) fixe et devant lesquels se déplacent, lors du mouvement du rotor, des ouvertures (25) qui sont réalisés dans la plaque de recouvrement (3) commune aux inserts (11) et à la chambre d'air (10) et qui débouchent dans les chambres d'air (10).

10. Dispositif selon la revendication 9, caractérisé en ce que la prise d'air comprimé (22) est disposée sur un chapeau (15) et que les canaux d'air (24) sont enchâssés dans une bague d'étanchéité (13) supérieure disposée entre le rotor (1) et le chapeau (15).

**Claims**

1. Method of delivering powdery or granular material, in particular for spraying concrete, mortar or fireproof lining material, by means of a rotor (1) having delivery chambers (11'), the material being poured into the delivery chambers (11') at a filling point (26) and being transferred into a delivery line (30) at a discharge point (27) with the assistance of gravitational force, in which delivery line (30), for the further conveyance of the material, an injector flow is produced by means of a compressed-air jet, characterized in that the material, during conveyance from the filling point (26) to the discharge point (27), is acted upon and loosened by air streams, and that the material, upon reaching the discharge point (27), is reduced into a fluid state under the action of the air streams.

2. Method according to Claim 1, characterized in that the material in the delivery chambers (11'), before discharge, is converted at least roughly into a suspended state.

3. Method according to Claim 1 or 2, characterized in that the air streams are produced by pores in the essentially vertical walls (11) of the delivery chambers (11').

4. Method according to any of Claims 1 to 3, characterized in that the air flow is maintained at least as long as the delivery chambers (11') are filled with material.

5. Method according to any of Claims 1 to 4, characterized in that the compressed-air jet introduced into the delivery line (30) by means of the injector nozzle (31) is of a size suitable for delivering and spraying the material.

6. Device for performing the method according to any of Claims 1 to 5, comprising a rotor (1) which is arranged in an upright position and whose delivery chambers (11'), in a concentric arrangement around the rotor axis, extend parallel to the rotor axis, the rotor (1), for producing an air flow, being connected to a compressed-air source (32), a filling point (18, 21, 26) arranged above the rotor (1), a discharge point (27) offset by an angle of rotation relative to the filling point and arranged below the rotor (1), and a delivery line (30) which starts at the discharge point and into which there leads an injector nozzle (31) connected to the compressed-air source (32), characterized in that the walls (11) of the delivery chambers (11') are permeable to air, and that means (22, 23, 24, 25) are provided in order to connect the delivery chambers (11') to the compressed-air source (32) at least when approaching the discharge point (27) when the rotor (1) is running.

7. Device according to Claim 6, characterized in that the walls (11) of the delivery chambers (11') are formed by inserts, each of which is arranged inside an air chamber (10), and the air chambers can be connected to the compressed-air source (32) via the said means.

8. Device according to Claim 7, characterized in that the inserts (11) are made of a porous material and are machined smooth on the inside.

9. Device according to Claim 8, characterized in that present in the path of motion of the inserts (11) between the filling point (26) and the discharge point (27) are air channels (24) which are connected to a fixed compressed-air connection (22) and, during the movement of the rotor, are passed by openings (25) which are made in the common cover plate (3) of the inserts (11) and the air chambers (10) and lead into the air chambers (10).

10. Device according to Claim 9, characterized in that the compressed-air connection (22) is arranged on an attachment (15), and the air channels (24) are made in an upper sealing disc (13) arranged between the rotor (1) and the attachment (15).

FIG.1

FIG.2